# EUROPÄISCHE PATENTANMELDUNG

(11) **EP 2 282 221 A2**
(43) Veröffentlichungstag der Anmeldung: **09.02.2011**
(21) Anmeldenummer: 10169958.5
(22) Anmeldetag: 19.07.2010
(51) Int. Cl.: G01R 31/26

(54) **Einrichtung und Bewertungsverfahren für Solareinheiten**

(30) Priorität: 05.08.2009 DE 102009036132
(71) Anmelder: Wagner & Co. Solartechnik GmbH, 35091 Cölbe (DE)
(72) Erfinder: Beer, Michael, 35096 Weimar (DE); Kampmann, Jens, 35037 Marburg (DE); Farnung, Boris, 79110 Freiburg (DE); Ramlow, Steffen, 35096 Oberweimar (DE)
(74) Vertreter: Buchhold, Jürgen

(57) **Zusammenfassung**

Der Gegenstand der vorliegenden Erfindung betrifft eine Einrichtung zum Durchführen eines Bewertungsverfahrens für Solareinheiten und ein Bewertungsverfahren für Solareinheiten, umfassend ein mehrfaches Erfassen von zumindest einem Eingangsparameter und ein dazu korrespondierendes mehrfaches Erfassen von zumindest einem Ausgangsparameter in Erfassungsintervallen, wobei zumindest ein Erfassungsintervall für ein nachfolgendes Erfassen des mindestens einen Ausgangsparameters in Abhängigkeit von dem mindestens einen erfassten Eingangsparameter variiert wird.

Weiter betrifft der Gegenstand der vorliegenden Erfindung eine Solareinheit, ein Computerprogramm und eine Computerprogrammprodukt mit Mitteln zur Durchführung des Bewertungsverfahrens.

## Beschreibung

Die Erfindung betrifft ein Bewertungsverfahren für Solareinheiten, umfassend ein mehrfaches Erfassen von zumindest einem Eingangsparameter und ein dazu korrespondierendes mehrfaches Erfassen von zumindest einem Ausgangsparameter in Erfassungsintervallen, gemäß dem Oberbegriff von Anspruch 1.

Weiter betrifft die Erfindung eine Einrichtung zum Durchführen eines Bewertungsverfahrens für Solareinheiten, umfassend eine Erfassungseinheit zum mehrfachen Erfassen von mindestens einem Eingangsparameter und ein dazu korrespondierendes mehrfaches Erfassen von mindestens einem Ausgangsparameter in Erfassungsintervallen, gemäß dem Oberbegriff des Anspruchs 6.

Zudem betrifft die Erfindung eine Solareinheit, insbesondere eine Photovoltaikanlage, ein Solarmodul und/oder eine Solarzelle, zum Erzeugen von Solarenergie, gemäß dem Oberbegriff des Anspruchs 10.

Auch betrifft die Erfindung ein Computerprogramm umfassend Programmcodemittel zum Durchführen aller Schritte des Bewertungsverfahrens für Solareinheiten gemäß Anspruch 11.

Darüber hinaus betrifft die Erfindung ein Computerprogrammprodukt umfassend Programmcodemittel die auf einem computerlesbaren Medium gespeichert sind, um das Bewertungsverfahren für Solareinheiten durchzuführen, gemäß Anspruch 12.

Aus dem allgemeinen Stand der Technik sind Bewertungsverfahren und Einrichtungen hierfür für Solareinheiten wie Solarmodule und Solaranlagen bekannt.

Aus der DE 100 26 162 C2 ist beispielsweise ein Verfahren zur Qualitätskontrolle von photovoltaischen Zellen und Modulen (PV-Modulen) bekannt. Das bekannte Verfahren sieht vor, dass unter realen Umgebungsbedingungen am Einsatzstandort des betreffenden PV-Moduls zwei Strom-Spannungskennlinien des PV-Moduls bei unterschiedlicher Bestrahlungsstärke gleichen Spektrums gemessen und daraus zwei effektive Kennlinien ermittelt werden, wobei basierend auf diesen effektiven Kennlinien der Serienwiderstand und aus wenigstens einer Kennlinie die Peakleistung bestimmt werden. Eine Optimierung der Messung hinsichtlicher der Messungsintervalle erfolgt hierbei nicht.

Aus der DE 103 05 662 B4 ist weiter ein Verfahren zur Serieninnenwiderstandsmessung von PV-Modulen bekannt, bei dem zwei Strom-Spannungs-Kennlinien des PV-Moduls ermittelt werden, wobei eine erste Strom-Spannungskennlinie unter realen Umgebungsbedingungen gemessen wird und eine zweite Strom-Spannungskennlinie mittels einer Simulation ermittelt wird. Eine Optimierung der Messungen erfolgt auch hierbei nicht.

Aus der DE 20 2004 001 246 U1 ist eine Vorrichtung zum Messen, Auswerten und Senden der solaren Bestrahlungsstärke bekannt. Die Vorrichtung weist ein definiertes Strahlungssensorelement zur Erfassung der solaren Einstrahlung, Versorgungsspannungsaufbereitungseinheiten wie Gleichspannungswandler, Sperrdiode, Speicher, Ladestromkontrolleinheit und Gleichspannungswandler, Messwerteeinheiten wie Messshunt, Leistungsregler und Regel- und Steuerelektronik und funktechnische Aufbereitungseinheiten wie Sendereinheit, Gleichspannungs-/Hochfrequenzentkopplungsnetzwerk und Antenne auf. Bei der Vorrichtung ist vorgesehen, dass der Leistungsregler als MPP-Regler aufgebaut ist und das Strahlungssensorelement eine bevorzugte Reihenschaltung von Solarzellen im optimierten Spannungsbereich zur Messwertverarbeitung in der Regel- und Steuerelektronik aufweist. Auch hier erfolgt keine Optimierung hinsichtlich der Messungsintveralle.

Aus der DE 299 09 648 U1 ist außerdem ein Strahlungssensor mit einer für Solarstrahlung empfindlichen, photovoltaischen Messzelle und einem Gehäuse zu deren Aufnahme bekannt. Der Sensor ist derart aufgebaut, dass das Gehäuse aus einem an einem oberen Ende offenen Hohlkörper besteht, der durch einen eine Kabeldurchführung aufweisenden Boden und einen von diesem aufragenden, einen Hohlraum umgebenden Wandabschnitt gebildet ist, der an seinem oberen Ende mit einer Auflagefläche für die Messzelle und/oder eine transparente Abdeckung für diese versehen ist. Auch hier erfolgt keine Optimierung hinsichtlich der Messungsintervalle.

Aus der DE 10 2006 055 642 A1 sind ein Verfahren und eine Vorrichtung zur Ermittlung von Messwerten bekannt, die unter spektralem Bezug für die solare Bestrahlungsstärke am Ort eines PV-Generators charakteristisch sind. Zur Ermittlung dieser Messwerte dient eine ausgewählte, als Mess-Solarzelle verwendete Solarzelle des PV-Generators. Die zur Ermittlung der Messwerte erforderliche Energie wird mit Hilfe einer an den PV-Generator angeschlossenen Aufbereitungseinheit erzeugt. Auch hier erfolgt keine Optimierung hinsichtlich der Messungsintervalle.

Während einer Ertragsmessung kann in der Regel kein Strom ins Netz eingespeist werden. Die Dauer und Wahl einzelner Messintervalle wirkt sich somit auf den Ertrag der Anlage und die Qualität der Messergebnisse aus. Aus dem aufgeführten Stand der Technik sind zwar Vor-Ort-Messverfahren für PV-Module bekannt, welche entsprechende Messungen durchführen, jedoch erfolgt hierbei keine optimierte Messung mit ausgesuchten Zeitintervallen.

Ziel der Erfindung ist es, diese und weitere Nachteile des Standes der Technik zu vermeiden und ein Verfahren und eine Einrichtung zum optimierten Vor-Ort Erfassen für von Eingangsparametern wie einer Bestrahlung für Solareinheiten zu schaffen, bei denen insbesondere die Messinteveralle effizient eingeteilt werden.

Hauptmerkmale der Erfindung sind im kennzeichnenden Teil von Anspruch 1, im kennzeichnenden Teil von Anspruch 6, im kennzeichnenden Teil von Anspruch 10 und in den Ansprüchen 10 und 11 angegeben. Ausgestaltungen sind Gegenstand der Ansprüche 2 bis 5 und 7 bis 9.

Die technische Lehre der vorliegenden Erfindung sieht vor, dass bei einem Bewertungsverfahren für Solareinheiten, umfassend ein mehrfaches Erfassen von zumindest einem Eingangsparameter und ein dazu korrespondierendes mehrfaches Erfassen von zumindest einem Ausgangsparameter in Erfassungsintervallen, vorgesehen ist, dass zumindest ein Erfassungsintervall für ein nachfolgendes Erfassen des mindestens einen Ausgangsparameters in Abhängigkeit von dem mindestens einen erfassten Eingangsparameter variiert wird. Unter Solareinheiten sind alle Solar- oder Photovoltaikeinheiten wie Solarmodule, Solarelemente, Solarzellen oder dergleichen zu fassen. Die Solareinheiten erzeugen aus einfallender Solarstrahlung elektrische Energie Um die Effektivität der Solareinheit zu erfassen, das heißt deren Ertrag zumindest näherungsweise zu bestimmen, werden entsprechende Bewertungsverfahren angewendet. Dabei werden Ein- und Ausgangsparameter unter realen Bedingungen mit theoretischen oder Soll-Parametern verglichen und eine Bewertung durchgeführt. Grundsätzlich wird die Genauigkeit dieser Bewertungen erhöht, je häufiger Vor-Ort-Messungen durchgeführt werden. Da jedoch für die Messungen die Solareinheit vom Netz genommen werden muss, also keinen Ertrag erbringen kann, sollte die Messung optimiert sein.

Aus diesem Grunde wird erfindungsgemäß das Messintervall oder das Erfassungsintervall variiert. Dieses Variieren erfolgt in Abhängigkeit von Eingangsparametern, das heißt, nur wenn für die Messung effektivere oder bessere Eingangsparameter vorliegen wird eine weitere Messung durchgeführt. Dabei sollen die Eingangsparameter oder allgemeiner die Umgebungsbedingungen möglichst genau theoretischen Standard-Test-Bedingungen entsprechen. Deshalb und um aufwendige Simulationen oder teuere Spezialanlagen zu vermeiden und um den durch jede Messung verursachten Ertragsverlust der Solareinheit zu minimieren, wird erst dann eine weitere Messung oder Erfassung durchgeführt, wenn die tatsächlichen Umgebungsbedingungen innerhalb definierter Grenzen liegen. Die Umgebungsbedingungen werden hierzu erfasst und/oder aufgezeichnet, wobei die Aufzeichnung permanent erfolgen kann. Nach Erfassung/Aufzeichnungen werden die Umgebungsbedingungen dann mit den Stand-Test-Bedingungen verglichen. Liegen die Umgebungsbedingungen innerhalb der Toleranzgrenzen der Standard-Test-Bedingungen, dann wird eine Erfassung/Messung gestartet oder durchgeführt. Nach erfolgter Messung werden die Grenzen, Grenzwerte oder Toleranzgrenzen verschärft, das heißt, es wird ein engerer Toleranzbereich eingestellt, in den die Umgebungsbedingungen fallen müssen, um die Erfassung/Messung durchzuführen. Das heißt nur bei verbesserten Umgebungsbedingungen findet eine erneute Messung statt. Bei dem Bewertungsverfahren werden als Umgebungsbedingungen oder als Eingangsparameter etwa die Bestrahlungsstärke der Solarstrahlung, die Modultemperatur und/oder die Außentemperatur sowie die Zeit erfasst. Als Ausgangsparameter können unter anderem der Solarertrag, zum Beispiel im Verhältnis zu der Bestrahlungsstärke der Solarstrahlung, ein optimaler Arbeitspunkt (Maximum Power Point -MMP) oder ein Spannungsertrag sowie ein Leistungsverhältnis oder Performance Ratio, insbesondere ohne Wechselrichtereinfluss erfasst werden. Die Parameter können zumindest teilweise mittels Kennlinienmessung erfasst werden. Insbesondere kann eine automatisierte Kennlinenmessung erfolgen, welche gestartet wird, sobald mindestens ein Parameter, insbesondere mehrere Parameter, vor allem relevante Parameter in einen Toleranzbereich nahe der Standard-Test-Bedingungen liegt/liegen. Um die Anzahl der Kennlinienmessungen pro Zeiteinheit zu reduzieren und um das Erhalten reduntanter Infromationen zu vermeiden, erfolgt die Erfassung entsprechend vorgegebener Algorithmen, welche insbesondere die Grenzwerte und somit den Toleranzbereich nach jeder Messung verschärfen. Durch die Reduzierung der Kennlinienmessungen, bei denen die Solareinheit vom Netz genommen werden muss und somit ein Ertragsverlust einhergeht, lässt sich die Solareinheit effektiver Nutzen.

In einem Ausführungsbeispiel der vorliegenden Erfindung ist vorgesehen, dass die Erfassungsintervalle derart variiert werden, dass ein erneutes Erfassen zumindest des Ausgangsparameters nur durchgeführt wird, wenn zumindest ein nachfolgend erfasster Eingangsparameter sich gegenüber einem vorhergehend erfassten Eingangsparameter einem vorgegebenen Sollwert angenähert hat. Der Sollwert kann mittels Toleranzgrenzen begrenzt sein. Die Toleranzgrenzen lassen sich vorgeben. Nach jeder erfolgreichen Messung werden die Tolerangrenzen enger an den Sollwert gesetzt, sodass ein engerer Toleranzbereich entsteht. Ergibt eine Messung oder Erfassung der Eingangsparameter, dass diese innerhalb der engeren Toleranzgrenzen liegen, so wird das Bewertungsverfahren zumindest teilweise neu durchgeführt.

In einem weiteren Ausführungsbeispiel der vorliegenden Erfindung ist vorgesehen, dass die Erfassungsintervalle derart variiert werden, dass ein erneutes Erfassen zumindest des Ausgangsparameters nur durchgeführt wird, wenn eine Folge an erfassten Eingangsparametern sich gegenüber einem vorhergehend erfassten Eingangsparameter nicht von einem vorgegebenen Sollwert entfernt hat. Die Messung erfolgt nur bei gleichen oder verbesserten Umgebungsbedinungen, vorzugsweise nur bei verbesserten Umgebungsbedingungen. Hierzu werden die Toleranzgrenzen entsprechend gesetzt. Das Variieren der Toleranzgrenzen kann in Abhängigkeit zu der vorherigen Messung erfolgen. Liegen die Umgebungsbedingungen sehr nahe an dem Sollwert, so können die Toleranzgrenzen sehr eng an den Sollwert angrenzen. Weichen die Umgebungsbedingungen innerhalb des Toleranzwertes relativ weit von dem Sollwert oder den Sollwerten ab, so lassen sich die Toleranzgrenzen zwar näher an den Sollwert annähren, jedoch nur mit geringen Veränderungen. Die Veränderung kann jedoch auch in festen Schritten erfolgen, beispielsweise um einen gleichbleibenden Wert. Es können auch prozentuale Veränderungen der Toleranzgrenzen erfolgen, beispielsweise so, dass nach erfolgreicher Erfassung der Toleranzbereich um beispielsweise 10% verringert ist.

Noch ein weiteres Ausführungsbeispiel der vorliegenden Erfindung sieht vor, dass das Erfassen mindestens eines Eingangsparameters zeitlich gesteuert wird, insbesondere in vorbestimmbaren Intervallen erfolgt. Die Eingangsparameter können permanent erfasst werden. Um den Erfassungsaufwand zu reduzieren, können die Eingangsparameter auch beispielsweise alle zehn Minuten erfasst werden. Die Zeitintervalle können auch in Abhängigkeit von der Anzahl der bereits durchgeführten Erfassungen oder der Größe des Toleranzbereichs durchgeführt werden.

Wiederum ein anderes Ausführungsbeispiel der vorliegenden Erfindung sieht vor, dass das Erfassen des Ausgangsparameters ein Erfassen der Kennlinien der Solareinheit umfasst. Kennlinien können Strom- und/oder Spannungskennlinien sein, insbesondere Kennlinien betreffend einen Kurzschlussstrom, eine Leerlaufspannung, einen Strom im optimalen Arbeitspunkt, eine Spannung im optimalen Arbeitspunkt und dergleichen. Eine Auflösung der erfassten Werte oder Kennlinien kann in Sekunden- bis hin zu Stundenmittelwerten erfolgen.

Die technische Lehre der vorliegenden Erfindung sieht weiter vor, dass bei einer Einrichtung zum Durchführen eines Bewertungsverfahrens für Solareinheiten, umfassend eine Erfassungseinheit zum mehrfachen Erfassen von mindestens einem Eingangsparameter und ein dazu korrespondierendes mehrfaches Erfassen von mindestens einem Ausgangsparameter in Erfassungsintervallen, vorgesehen ist, dass die Erfassungseinheit zumindest einen Erfassungsabschnitt aufweist, der ausgebildet ist, um ein Erfassungsintervall für ein nachfolgendes Erfassen der Ausgangsparameter in Abhängigkeit von mindestens einem erfassten Eingangsparameter zu variieren. Die Einrichtung kann eine Solarzelle oder einen Solarsensor zur Messung der Solareinstrahlung umfassen. Diese können samt weiteren Baueinheiten auf einer Messkarte oder mehreren Messkarten zusammengefasst sein. Dabei können mehrere Einrichtungen und/oder Messkarten gekoppelt werden, beispielsweise um zeitsynchrone Erfassungen durchzuführen. Für die Weiterleitung von Daten können entsprechende Übertragungseinheiten vorgesehen sein. So können die Daten zum Beispiel über externe Rechner ausgewertet und/oder verteilt werden.

Eine Ausführungsform der vorliegenden Erfindung sieht vor, dass eine Steuereinheit vorgesehen ist, welche die Erfassungsintervalle derart variiert, dass ein erneutes Erfassen zumindest der Ausgangsparameter nur durchgeführt wird, wenn zumindest ein nachfolgend erfasster Eingangsparameter sich gegenüber einem vorhergehend erfassten Eingangsparameter einem vorgegebenen Sollwert angenähert hat. Die Steuereinheit kann hierzu einen entsprechenden Logikchip oder dergleichen umfassen.

Eine andere Ausführungsform der vorliegenden Erfindung sieht weiter vor, dass eine Vergleichseinheit vorgesehen ist, welche die Eingangsparameter mit einem Sollwert vergleicht, sodass die Erfassungsintervalle in Abhängigkeit von dem Vergleich variierbar sind. Über die Vergleichseinheit lässt sich eine Bewertung realisieren. Hierzu wird in der Vergleichseinheit ein Sollwert oder ein Sollwertbereich abgelegt. Diese wird durch Toleranzgrenzen definiert, welche entsprechend variierbar sind. Liegt mindestens ein erfasster Eingangsparameter in dem Toleranzbereich, so wird das Bewertungsverfahren durchgeführt. Nach erfolgter Bewertung, Erfassung oder Messung, wird der Toleranzbereich durch Verändern der Toleranzgrenzen variiert, beispielsweise werden die Toleranzgrenzen näher an den Sollwert herangerückt.

Wiederum eine andere Ausführungsform der vorliegenden Erfindung sieht vor, dass eine Taktungseinheit vorgesehen ist, die das Erfassen mindestens eines Eingangsparameters taktet. Um den Erfassungsaufwand zu reduzieren, kann die Erfassung zum Beispiel der Eingangsparameter, also der Umgebungsbedingungen, getaktet werden, sodass eine Erfassung nur in vorbestimmten Zeitintervallen erfolgen. Die Zeitintervalle können dabei über die Erfassungsdauer variiert werden.

Auch sieht die technische Lehre der vorliegenden Erfindung vor, dass bei einer Solareinheit, insbesondere einer Photovoltaikanlage, einem Solarmodul und/oder einer Solarzelle, zum Erzeugen von elektrischer Energie vorgesehen ist, dass eine erfindungsgemäße Vorrichtung zur Bewertung der Leistung einer Solareinheit vorgesehen ist.

Zudem sieht die technische Lehre der vorliegenden Erfindung vor, dass ein Computerprogramm umfassend Programmcodemittel zum Durchführen aller Schritte des erfindungsgemäßen Verfahrens vorgesehen ist, wenn das Programm auf einem Computer ausgeführt wird.

Nicht zuletzt sieht die technische Lehre der vorliegenden Erfindung vor, dass ein Computerprogrammprodukt umfassend Programmcodemittel die auf einem computerlesbaren Medium gespeichert sind, um das erfindungsgemäße Verfahren durchzuführen, wenn das Programmprodukt in einem Computer läuft.

Weitere Merkmale, Einzelheiten und Vorteile der Erfindung ergeben sich aus dem Wortlaut der Ansprüche sowie aus der Beschreibung von Ausführungsbeispielen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Bewertungsverfahren für Solareinheiten, umfassend ein mehrfaches Erfassen von zumindest einem Eingangsparameter und ein dazu korrespondierendes mehrfaches Erfassen von zumindest einem Ausgangsparameter in Erfassungsintervallen, **dadurch gekennzeichnet, dass** zumindest ein Erfassungsintervall für ein nachfolgendes Erfassen des mindestens einen Ausgangsparameters in Abhängigkeit von dem mindestens einen erfassten Eingangsparameter variiert wird.

2. Verfahren nach Anspruch 1, **dadurch gekennzeichnet, dass** die Erfassungsintervalle derart variiert werden, dass ein erneutes Erfassen zumindest des Ausgangsparameters nur durchgeführt wird, wenn zumindest ein nachfolgend erfasster Eingangsparameter sich gegenüber einem vorhergehend erfassten Eingangsparameter einem vorgegebenen Sollwert angenähert hat.

3. Verfahren nach Anspruch 1 oder 2, **dadurch gekennzeichnet, dass** die Erfassungsintervalle derart variiert werden, dass ein erneutes Erfassen zumindest des Ausgangsparameters nur durchgeführt wird, wenn eine Folge an erfassten Eingangsparametern sich gegenüber einem vorhergehend erfassten Eingangsparameter nicht von einem vorgegebenen Sollwert entfernt hat.

4. Verfahren nach einem der vorherigen Ansprüche 1 bis 3, **dadurch gekennzeichnet, dass** das Erfassen mindestens eines Eingangsparameters zeitlich gesteuert wird, insbesondere in vorbestimmbaren Intervallen erfolgt.

5. Verfahren nach einem der vorherigen Ansprüche 1 bis 4, **dadurch gekennzeichnet, dass** das Erfassen des Ausgangsparameters ein Erfassen der Kennlinien der Solareinheit umfasst.

6. Einrichtung zum Durchführen eines Bewertungsverfahrens für Solareinheiten, umfassend eine Erfassungseinheit zum mehrfachen Erfassen von mindestens einem Eingangsparameter und ein dazu korrespondierendes mehrfaches Erfassen von mindestens einem Ausgangsparameter in Erfassungsintervallen, **dadurch gekennzeichnet, dass** die Erfassungseinheit zumindest einen Erfassungsabschnitt aufweist, der ausgebildet ist, um ein Erfassungsintervall für ein nachfolgendes Erfassen der Ausgangsparameter in Abhängigkeit von mindestens einem erfassten Eingangsparameter zu variieren.

7. Einrichtung nach Anspruch 7, **dadurch gekennzeichnet, dass** eine Steuereinheit vorgesehen ist, welche die Erfassungsintervalle derart variiert, dass ein erneutes Erfassen zumindest der Ausgangsparameter nur durchgeführt wird, wenn zumindest ein nachfolgend erfasster Eingangsparameter sich gegenüber einem vorhergehend erfassten Eingangsparameter einem vorgegebenen Sollwert angenähert hat.

8. Einrichtung nach Anspruch 7 oder 8, **dadurch gekennzeichnet, dass** eine Vergleichseinheit vorgesehen ist, welche die Eingangsparameter mit einem Sollwert vergleicht, so dass die Erfassungsintervalle in Abhängigkeit von dem Vergleich variierbar sind.

9. Einrichtung nach einem der vorherigen Ansprüche 7 bis 9, **dadurch gekennzeichnet, dass** eine Taktungseinheit vorgesehen ist, die das Erfassen mindestens eines Eingangsparameters taktet.

10. Solareinheit, insbesondere eine Photovoltaikanlage, ein Solarmodul und/oder eine Solarzelle, zum Erzeugen von Solarenergie, **dadurch gekennzeichnet, dass** eine Vorrichtung zur Bewertung der Leistung einer Solareinheit nach einem der Ansprüche 7 bis 10 vorgesehen ist.

11. Computerprogramm umfassend Programmcodemittel zum Durchführen aller Schritte gemäß jedes einzelnen der Ansprüche 1 bis 6, wenn das Programm auf einem Computer ausgeführt wird.

12. Computerprogrammprodukt umfassend Programmcodemittel die auf einem computerlesbaren Medium gespeichert sind, um das Verfahren nach jedem einzelnen der Ansprüche 1 bis 6 durchzuführen, wenn das Programmprodukt in einem Computer läuft.
